# EUROPEAN PATENT APPLICATION

(11) **EP 2 154 646 A1**
(43) Date of publication of application: **17.02.2010**
(21) Application number: 08752386.6
(22) Date of filing: 07.05.2008
(51) Int. Cl.: G06Q 30/00, G09F 19/00

(54) **ADVERTISEMENT INFORMATION MANAGEMENT METHOD, ADVERTISEMENT INFORMATION MANAGEMENT SYSTEM, CALL RECEIVING METHOD, AND CALL RECEIVING SYSTEM**

(30) Priority: 09.05.2007 JP 2007124452
(71) Applicant: Comsquare Co., Ltd., Tokyo 135-0043 (JP)
(72) Inventor: UESHIMA, Yasushi, Tokyo 135-0043 (JP); MUKAIDA, Takashi, Tokyo 135-0043 (JP); HIGUCHI, Masakazu, Tokyo 135-0043 (JP)
(74) Representative: Staudt, Hans-Peter
(86) International application number: PCT/JP2008/058494
(87) International publication number: WO 2008/140000

(57) **Abstract**

Providing an advertisement information managing method, an advertisement information managing system, a call receiving method, and a call receiving system that are capable of automatically providing a plurality of items of advertisement information, ascertaining which advertisement information a call has been made according to without requiring much work, and easily ascertaining the advertisement effect for each item of advertisement information. This advertisement information managing method is used in an advertisement information managing system S for judging which advertisement image among a plurality of advertisement images 9a to 9c a call that is made according to the advertisement image has been made according to, including a step for generating the plurality of identification information 11a to 11c, and a step for cross-checking the plurality of identification information 11a to 11c with input information 16 in the call that is made according to one advertisement image 9a among the plurality of the advertisement images 9a to 9c generated in order to index the plurality of identification information 11a to 11c respectively.

## Description

### Technical Field

The present invention relates to an advertisement information managing method, an advertisement information managing system, a call receiving method and a call receiving system, and particularly relates to an advertisement information managing method, etc. using a Pay Per Call system.

### Background Art

A pay per click system has been used as one of the methods of advertising using web pages on the Internet. The pay per click system is a system in which an advertising agency charges an advertisement fee to an advertiser according to the count which an item of advertisement information displayed on the web page is clicked.

For example, when advertisement information of the advertiser is posted on a web page of an advertisement-providing site and a user who has viewed the page selects (clicks) the advertisement information, the advertisement information is linked to a website managed by the advertiser and the user can view the detailed information regarding the advertisement information. And, the advertiser pays an advertisement fee to the administrator of the portal site according to the count of clicks made on the advertisement information.

This method is frequently used in portal (entrance) sites that have many users (viewers) and can obtain a high advertisement effect. The administrator of the portal site sets frames for advertisements in a part of the site page, runs advertising by lending the frames for advertisements to advertisers, and collects advertisement fees according to the count of clicks made on the advertisement information.

However, this pay per click system has a problem in that, when the advertiser does not have their own site, no site can be set to be linked to and no detailed information regarding the advertisement information can be provided. Because payment of an advertisement fee is generated simply through clicks made on advertisement information, □direct contact with users (clients) □ cannot be obtained as an effect for the cost of advertising, either.

Moreover, because the advertisement fee is generated according to the count of clicks made even when a user unintentionally clicks the advertisement information or intentionally repeats clicking, the association between the advertisement effect and the advertisement fee may be decreased.

Therefore, a system has also been proposed in which a phone number corresponding to each advertiser is posted on a web page of an advertisement-providing site along with the advertisement information, and when a user who has seen it calls the advertiser, the advertisement fee is charged according to the connection success of the phone call. Furthermore, one of the systems with this method of advertising is called Pay Per Call system, and it is discolosed in, for example, Patent Document 1.

Patent Document 1: Japanese Patent Application Publication No. 2005-115945

### Disclosure of the Invention

### Problems to be Solved by the Invention

However, when posting advertisement information in many advertisement-providing sites, if all posted phone numbers are the same phone numbers, it is impossible to distinguish which advertisement-providing site the user has seen to make the phone call. Therefore, there is a problem in that it is impossible to ascertain which advertisement-providing site has a high advertisement effect and which advertisement-providing site has a low advertisement effect.

Therefore, a method has been proposed in which different phone numbers are allocated for each item of advertisement information and posted on different advertisement-providing sites in order to ascertain, according to the phone number the user calls, which advertisement-providing site the user has seen to make the phone call. According to this method, the advertisement effect of each advertisement-providing site can be ascertained.

However, in recent years, there are many advertisement-providing sites. For example, when an advertiser posts advertisement information of their company on 10,000 or 100,000 advertisement-providing sites, a large amount of work is required just to allocate different phone numbers to each of a number of these sites, causing a problem of low work efficiency. Moreover, for example, ascertaining the difference of the advertisement effect for each different time, each different day of the week, etc. may be needed by updating the posted information on the specific advertising-providing site.

The present invention is proposed on considering the abovementioned situations, and it is an exemplary object of the present invention to provide an advertisement information managing method, an advertisement information managing system, a call receiving method, and a call receiving system that are capable of automatically providing a plurality of items of advertisement information, ascertaining which advertisement information a call has been made according to without requiring much work, and easily ascertaining the advertisement effect for each item of advertisement information.

Moreover, it is another exemplary objecrt of the present invention to provide an advertisement information managing method, etc. that is capable of ascertaining more detailed difference of the advertisement effect, for example, for each different times, each different day of the week, etc. by automatically and appropriately updating the content of advertisement information to be posted on advertisement-providing sites.

### Means for Solving the Problems

In order to solve the abovementioned object, the advertisement information managing method according to an exemplary aspect of the present invention is used in an advertisement information managing system for judging which advertisement information among a plurality of advertisement information a call that is made according to the advertisement information has been made according to, including a step for generating the plurality of identification information, and a step for cross-checking the plurality of identification information with input information in the call that is made according to one of the advertisement information among the plurality of the advertisement information generated in order to index the plurality of identification information respectively.

Because the plurality of identification information to be used to identify the advertisement information is generated automatically, it is not necessary to set different identification information for each advertisement information. Moreover, because the input information in the call is cross-checked with the identification information, when both match, it can be judged that the call has been made according to the advertisement information that indexes the identification information. Therefore, the advertisement effect for each advertisement information can be ascertained very easily without requiring much work. When the advertisement information is posted on different advertising media (e.g., different Internet sites), the advertisement effect can be easily ascertained for each Internet site.

As used herein, the advertisement information includes advertisement images (so-called banner advertisement) posted on Internet sites such as, for example, advertisement-providing sites. Moreover, the identification information and the input information may be, for example, a phone number, a part of the phone number or an identification number that a user inputs into the phone following the phone number. The advertisement image includes a moving image as well as a still image. For example, an image composed by movie data with the avi format, the mpeg2 format or the mpeg4 format, or animation data with the gif format or the flash format, etc. may be applied as the advertisement information. It is obvious that it is possible to apply voice data with the wav format, the WMA format or the MP3 format, etc. as advertisement information as well as an image.

The situation of □advertisement information indexes identification information□includes the case in which the identification information is visually displayed within the advertisement image, and also includes the case in which the identification information is displayed in another window or a balloon frame or the like only when the mouse pointer is placed on the advertisement image on the display screen in spite that the identification information is not usually displayed within the advertisement image. Case in which the identification information is displayed when the advertisement image is clicked is also included. The case in which the identification information as voice data is included in advertisement information as voice data, or the case in which the voice data as the identification information being associated with the advertisement image sounds when the mouse pointer is placed on the advertisement image is applicable.

Even when the identification information is visually displayed, the identification information may be displayed in text and numbers or the like, or the identification information may be displayed using code information, such as a barcode or a two-dimensional barcode. For example, if phone number information is included as identification information within a QR code (a type of two-dimensional barcode) and the QR code is displayed within the advertisement image, a call may be easily made to the phone number with a cell phone that has a QR code-reading function and a phone-to function (a function for making a call to a displayed phone number through an easy operation, such as one click).

The advertisement information managing method may further include a step for generating the plurality of advertisement information by combining the plurality of identification information with basic advertisement information, a step for posting a plurality of the advertisement information on a plurality of first Internet sites, a step for receiving the call, a step for extracting the input information in the call, and a step for judging that the call has been made according to the advertisement information that indexes the identification information when the input information and the identification information match.

Because the plurality of items of advertisement information is generated automatically by combining the plurality of items of identification information with the basic advertisement information, the plurality of items of advertisement information combined by the basic advertisement information with the identification information can be generated without requiring much work. For example, if a loud advertisement image for gathering the attention of users is basic advertisement information, many items of advertisement information integrated by combining the loud advertisement image with each different item of identification information can be easily generated. Many items of advertisement information that can easily gather attention and ascertain each advertisement effect can be easily and collectively generated.

Because the advertisement information is automatically posted on the plurality of first Internet sites (e.g., advertisement-providing sites), the advertisement information that indexes different identification numbers can be posted on the plurality of first Internet sites without requiring much work. Therefore, it becomes easier to control the advertisement effect of each first Internet site on which the advertisement information has been posted.

Since the call that is made according to the advertisement information is received and the input information in the call is extracted, it becomes easy to cross-check the input information with the identification information. Consequently, it is possible to easily ascertain which advertisement information the call has been made according to and to easily ascertain the advertisement effect of each first Internet site on which the advertisement information has been posted.

Using this configuration, when a user accesses the first Internet site, the advertisement information including the identification information is displayed there. When a call is then made according to the identification information, the call is received and, according to the input information input by the user when making the call, it is ascertained which posted advertisement information among the plurality of first Internet sites the call has been made according to. Therefore, the user can easily ascertain the identification information (e.g., the phone number allocated for each advertiser and the advertisement information) by viewing the first Internet site, and can subconsciously and automatically notify which advertisement information the call has been made according to simply by inputting the identification information as the input information when making the call. Consequently, this contributes to ascertaining the advertisement effect of each item of the advertisement information.

The advertisement information managing method may also include a step for generating the plurality of advertisement information by combining a plurality of index information that indexes the plurality of identification information with basic advertisement information, a step for posting the plurality of advertisement information on a plurality of first Internet sites, a step for receiving the call, a step for extracting the input information in the call, and a step for judging that the call has been made according to the advertisement information that indexes the identification information when the input information and the identification information match.

Because the plurality of items of advertisement information is generated automatically by combining the plurality of items of index information that indexes the plurality of items of identification information with the basic advertisement information, advertisement information combined by the basic advertisement information with the index information can be generated without requiring much work. In addition, each item of the identification information can be indexed by the index information. For example, if a loud advertisement image for gathering the attention of users is basic advertisement information, many items of advertisement information integrated by combining the loud advertisement image with each different item of identification information can be easily generated. Advertisement information that can easily gather attention and be used to easily control the advertisement effect of each first Internet site can be easily and collectively generated.

As used herein, the index information may be, for example, a program (a subprogram, a macro program, a script, etc.) or an argument for indexing each different item of identification information. In addition, the identification information may be externally obtained by the index information. Different items of index information may be allocated to different items of identification information, or the same item of index information may index different items of identification information according to other conditions (e.g., access time, the number of visits, etc.).

Because the advertisement information is automatically posted on a plurality of first Internet sites, advertisement information that indexes different identification numbers can be posted on the plurality of first Internet sites respectively without requiring much work. Therefore, it becomes easier to control the advertisement effect of each first Internet site on which the advertisement information has been posted.

The call that is made according to the advertisement information is received and the input information in the call is extracted, makes it easy to cross-check the input information with the identification information. Consequently, it is possible to easily ascertain which advertisement information the call has been made according to and to easily ascertain the advertisement effect of each first Internet site on which the advertisement information has been posted.

Using this configuration, when a user accesses the first Internet site, the advertisement information including the identification information is displayed there. Because the index information indexes the identification information, the identification information is consequently displayed on the first Internet site. When a call is made according to the identification information, then the call is received, and according to the input information input by the user when making the call, it is ascertained which posted advertisement information among the plurality of first Internet sites the call has been made according to. Therefore, the user can easily ascertain the identification information (e.g., the phone number allocated for each advertiser and advertisement information) by viewing the first Internet site, and can subconsciously and automatically notify which advertisement information the call has been made according to simply by inputting the identification information as the input information when making the call. Consequently, this contributes to ascertaining the advertisement effect of each item of the advertisement information.

The advertisement information managing method may also include a step for posting a plurality of basic advertisement information on a plurality of first Internet sites, the basic advertisement information link to a second Internet site, a step for posting the advertisement information on the second Internet site, the advertising information being associated with the first Internet site when the basic advertisement information on the first Internet site is selected, a step for receiving the call, a step for extracting the input information in the call, and a step for judging that the call has been made according to advertisement information that indexes the identification information when the input information and the identification information match.

It is not necessary to post identification information or index information that indexes the identification information on the first Internet site, and it is possible to reduce the time required for posting the basic advertisement information because the posting of the basic advertisement information is only needed. For example, only a loud advertisement image for gathering the attention of users may be posted on the first Internet site as basic advertisement information.

Because the basic advertisement information links to a second Internet site (e.g., a site of the advertiser), when a user selects the basic advertisement information, the second Internet site is displayed. The advertisement information that indexes the identification information is posted on the second Internet site, so the user can make a call according to the identification information. Because the identification information is associated with the first Internet site, it can be different identification information for each of a plurality of first Internet sites. Therefore, according to the identification information, it is possible to ascertain which posted advertisement information among the plurality of first Internet sites has been selected and to easily ascertain the advertisement effect of each first Internet site on which the advertisement information has been posted.

The advertisement information managing system as another exemplary aspect of the present invention judges which advertisement information among a plurality of advertisement information a call that is made according to the advertisement information has been made according to, including an identification information-generating part that generates a plurality of identification information, and an information-verifying part that cross-checks the plurality of identification information with input information in the call that is made according to one of the advertisement information among the plurality of advertisement information generated in order to index the plurality of identification information respectively.

Because the identification information-generating part automatically generates the plurality of items of identification information used to identify the advertisement information and the information-verifying part cross-checks the input information in the call with the identification information, it is possible to judge that the call has been made according to the advertisement information that indexes the identification information when the input information and the identification information match. Therefore, the advertisement effect of each item of advertisement information can be ascertained very easily without requiring much work. When the advertisement information is posted on different advertising media (e.g., different Internet sites), the advertisement effect can be easily ascertained for each of the Internet sites.

The call receiving method as still another exemplary aspect of the present invention is used in an advertisement information managing system that judges which advertisement information among a plurality of advertisement information a call that is made according to the advertisement information has been made according to, including a step for receiving the call that is made according to one of the advertisement information among the plurality of advertisement information generated inorder to index a plurality of identification information respectively, and a step for externally sending input information in the call in order to cross-check the input information with the plurality of identification information.

The call that is made according to the advertisement information is received and the input information in the received call is sent in order to be cross-checked with the plurality of items of identification information, and therefore, the input information can be easily cross-checked with the identification information at the destination. According to the verification results, it is possible to judge which advertisement information the call has been made according to, so the advertisement effect of each item of advertisement information can consequently be easily ascertained.

In a further exemplary aspect of the present invention, the call receiving system receives a call in order to judge which advertisement information among a plurality of advertisement information a call that is made according to the advertisement information has been made accoring to, the call receiving system including a call receiving part for receiving the call that is made according to one of the advertisement information among the plurality of advertisement information generated in order to index a plurality of identification information respectively, and an information-sending part for externally sending input information in the call in order to cross-check the input information with the plurality of identification information.

The call receiving part receives the call that is made according to the advertisement information and the information-sending part sends the input information in the received call in order to cross-check the same with the plurality of items of identification information, and therefore, the input information can be easily cross-checked with the identification information at the destination. According to the verification results, it is possible to judge which advertisement information the call has been made according to, so the advertisement effect of each item of advertisement information can consequently be easily ascertained.

Further objects and other features of the present invention will become readily apparent from the following description of the preferred embodiments with reference to accompanying drawings.

### Effects of the Invention

According to the present invention, a plurality of items of advertisement information can be provided automatically, it is possible to ascertain which advertisement information a call has been made according to without requiring much work, and the advertisement effect of each item of advertisement information can be easily ascertained. By posting the plurality of items of advertisement information on a plurality of first Internet sites, it is possible to easily ascertain which first Internet sites exert a high advertisement effect.

Moreover, by automatically updating the content of advertisement information posted on the first Internet site, it is possible to ascertain more detailed difference in the advertisement effect for each different time or day of the week, etc..

### Detailed Description of the Invention

### [Embodiment 1]

An advertisement information managing system S using an advertisement information managing method according to Embodiment 1 of the present invention will now be described with reference to the drawings. Furthermore, in the present specification, a server refers to a server computer and a site (a □website□and an □Internet site□are also generally synonymous) refers to a collective entity of web pages established virtually within the server. A web page can be specified by an URL and is a virtual information-providing medium in which various types of information, such as character information and image information, are posted. As used herein, □posting on a website□is used in a synonymous manner with □posting on a web page □, and □viewing a website□is used in a synonymous manner with □viewing a web page. □

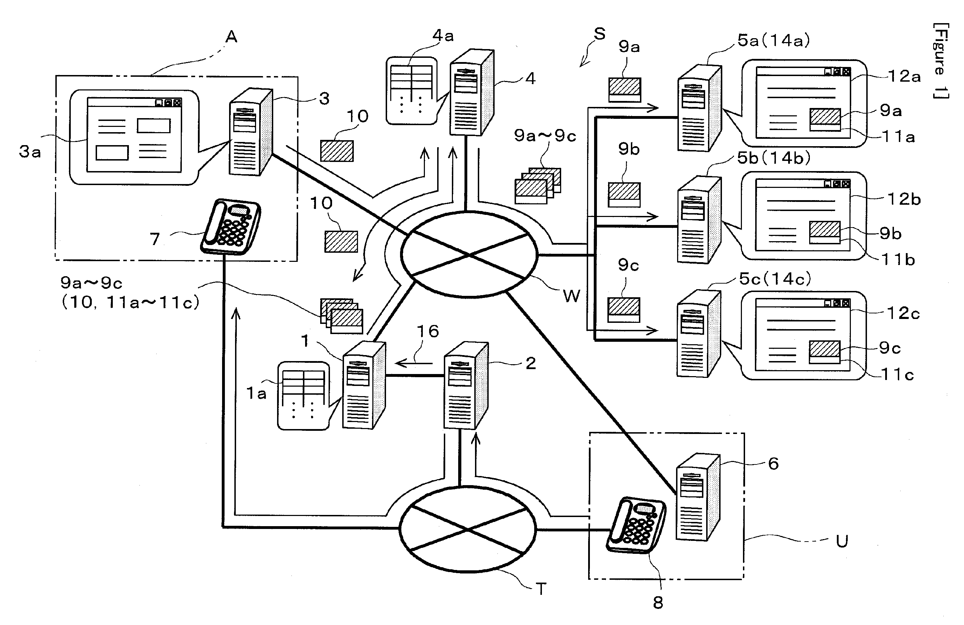

Figure 1 is a schematic diagram illustrating the overall configuration of the advertisement information managing system S. This advertisement information managing system S is roughly configured with an advertisement information management server 1 and a call receiving server (call receiving system) 2, and the advertisement information management server 1 is connected to an advertiser □s server 3, an agent □s server 4, advertisement-providing servers 5a to 5c, and a user □s computer 6 via the Internet W in a manner that allows for information to be received and sent. The advertiser and the user have an advertiser □s phone 7 and a user □s phone 8, respectively, which are connected to the call receiving server 2 via a telephone network T.

The advertiser □s server 3 is a server computer managed by an advertiser A, and an advertiser □s website (advertiser □s site) 3a is established internally as a second Internet site. This advertiser □s site 3a is linked to advertisement images (advertisement information) 9a to 9c, which are described below, and the content of the advertiser □s site 3a (detailed information of the advertisement information) is displayed on the user □s computer 6 when a user U clicks on the advertisement images 9a to 9c. Moreover, the advertiser A can send a banner image (basic advertisement information) 10 to the agent □s server 4 via the advertiser □s server 3.

This banner image 10 is, for example, a decorative advertisement image to which various colors and patterns have been added to gather the attention of users or an illustrative advertisement image for briefly describing the content of the advertisement of the advertiser A. Most banner images are usually still images, and while it is understood that they may be moving images configured in the abovementioned various file formats, they will be described in the present Embodiment 1 on an assumption that they are still images.

The agent □s server 4 is a server computer managed by the advertising agent and connected to a plurality of advertisement-providing servers 5a to 5c via the Internet W and comprehensively manages these advertisement-providing servers 5a to 5c. The agent □s server 4 has a function to receive the banner image 10 from the advertiser □s server 3. Additionally, it sends the banner image 10 to the advertisement information management server 1 and receives the plurality of advertisement images 9a to 9c combined with a plurality of items of identification information 11a to 11c from the advertisement information management server 1. Furthermore, it also has a function to send the plurality of advertisement images 9a to 9c to each of the plurality of advertisement-providing servers 5a to 5c.

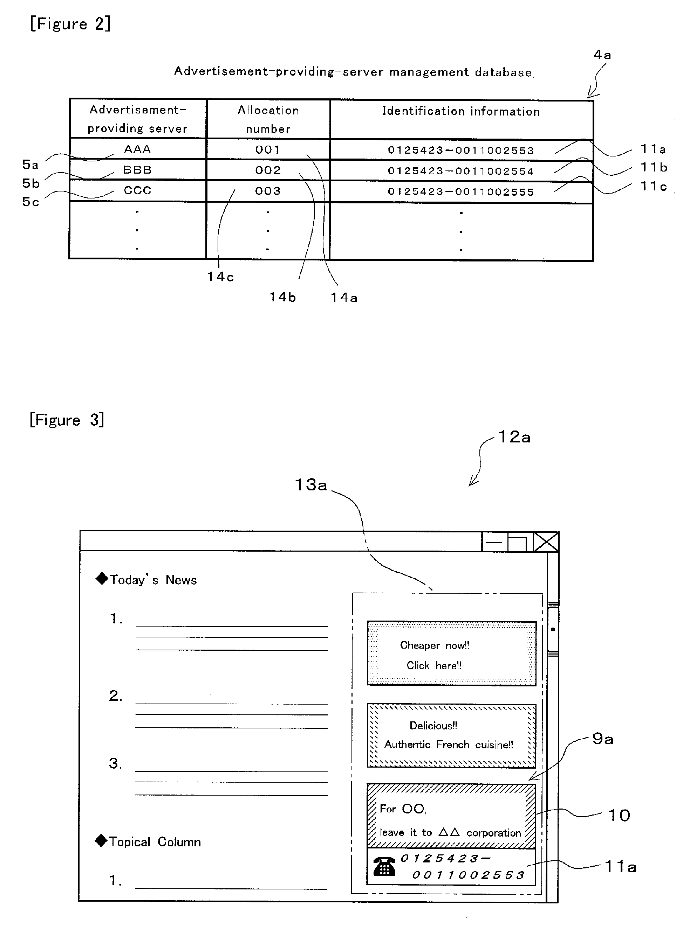

The agent □s server 4 internally includes a memory device that is not shown. Inside the memory device, an advertisement-providing-server management database 4a is established as shown in Figure 2. In this advertisement-providing-server management database 4a, allocation numbers 14a to 14c of each of the advertisement-providing servers 5a to 5c and each of the identification information 11a to 11c within the advertisement images 9a to 9c sent to each of the advertisement-providing servers 5a to 5c are included after being mutually associated with each other.

The advertisement-providing servers 5a to 5c are server computers each managed by an advertisement provider, and advertisement-providing sites 12a to 12c are established inside each of the servers as first Internet sites. Figure 3 is an example of a display screen of a web page of the advertisement-providing site 12a.

This advertisement-providing site 12a is referred to as a so-called portal site, and various types of information are posted within the page. An advertisement frame 13a is placed within the page, and the advertisement image 9a received from the agent □s server 4 is posted within the advertisement frame 13a.

The advertisement image 9a is configured by combining the banner image 10 with the identification information 11a and has a function to provide the identification information 11a to the user U while gathering the attention of the user U. The identification information 11a is, for example, phone number information □0125423-0011002553□ having a total of 17 digits that include a server identification number as the first 7 digits and an advertisement identification number as the second 10 digits. The user U can call the advertiser A of this advertisement image 9a by making a call according to this identification information 11a.

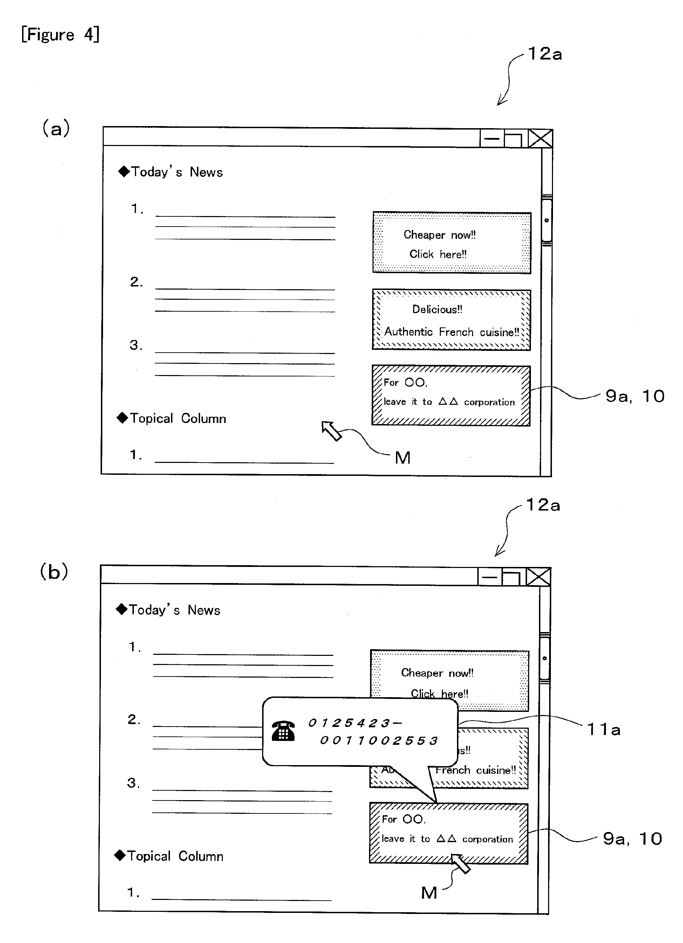

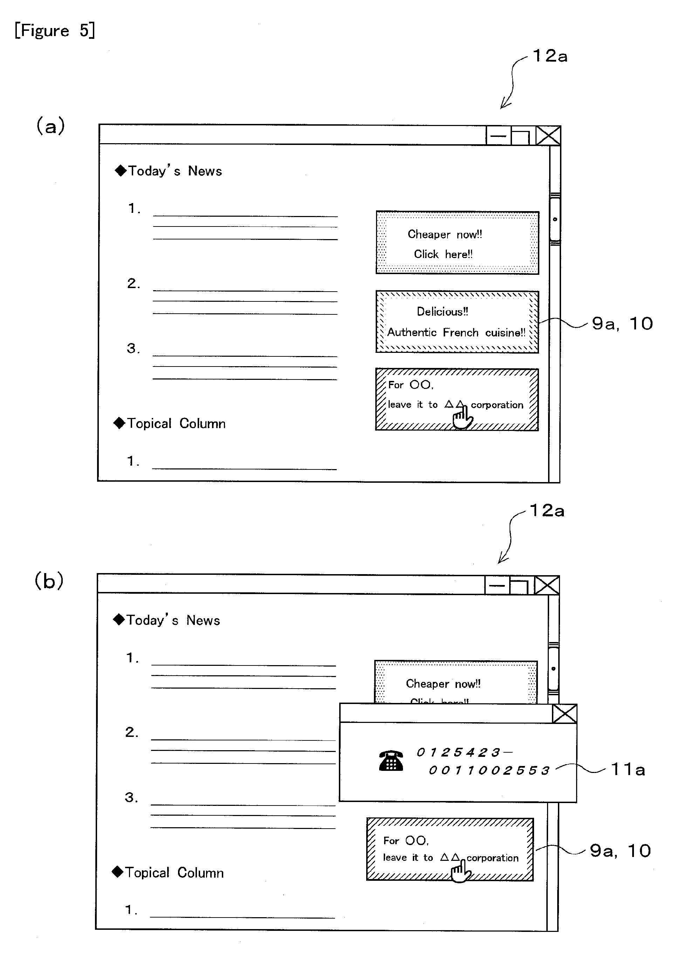

For the method of proving the identification information 11a in the advertisement-providing site 12a, several methods may be applied. For example, as shown in Figure 3, there is a method in which the identification information 11a is displayed by being posted on the advertisement-providing site 12a with the banner image 10. For example, there is a method in which, as shown in Figure 4(a), in a normal state (i.e., when the mouse pointer M is not placed on the banner image 10), only the banner image 10 is displayed and the identification information 11a is not displayed and, as shown in Figure 4(b), when the mouse pointer M is moved onto the banner image 10, the identification information 11a is displayed in a balloon. For example, there is a method in which, as shown in Figure 5(a), in a normal state (i.e., before the banner image 10 is clicked using the mouse), only the banner image 10 is displayed and the identification information 11a is not displayed and, as shown in Figure 5(b), when the banner image 10 is clicked using the mouse, another window appears and the identification information 11a is displayed within the window.

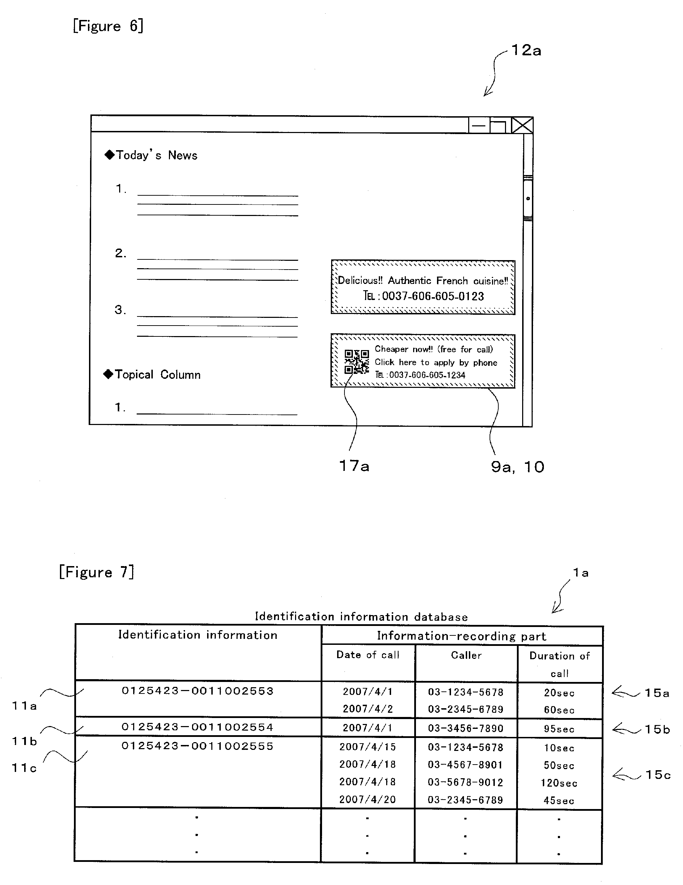

Moreover, if the aftermentioned identification information-generating part has a function to generate the identification information 11a and concurrently generate a QR code 17a corresponding to the identification information 11a, as shown in Figure 6, a method for displaying the QR code 17a within the banner image 10 may also be applied. For example, if the user U has a cell phone and this cell phone has a QR code-reading function and a phone-to function, such a method of providing the identification information 11a is convenient for the user U.

When the user U connects to the advertisement-providing site 12a using the user □s computer 6 and the banner image 10 is displayed on the display screen, the user U uses the QR code-reading function of the cell phone to read the QR code 17a within the banner image 10. A phone number as the identification information 11a corresponding to the QR code 17a is then displayed on the display screen of the cell phone. When the user U clicks the phone number, they can easily call the phone number through the phone-to function.

The advertisement images 9b, 9c are similarly posted on the advertisement-providing sites 12b, 12c. The banner image 10 in the advertisement images 9b, 9c are common to the one in the advertisement image 9a, but each item of the identification information 11b, 11c has a different number. In other words, the identification information 11b has □0125423-0011002554□ and the identification information 11c has □0125423-0011002555.□Therefore, it is possible to ascertain which advertisement effect was effective among the advertisement images 9a to 9c by ascertaining which number the user U has called.

Obviously, the identification information 11a to 11c is not limited to 17-digit phone number information and may be 2- to 4-digit information that is a part of a phone number or an input number of a few digits for the user U to input into the destination server after making the call. Moreover, if the destination server has a voice-recognition function, the identification information 11a to 11c may also be a keyword for the user U to say during the call. As the other configurations of the advertisement-providing sites 12b, 12c are identical to that of the advertisement-providing site 12a, the descriptions thereof are omitted.

Furthermore, in the present Embodiment 1, it has been described that the agent□s server 4 is managed by the advertising agent and the advertisement-providing servers 5a to 5c are managed by the advertisement providers as if they are different servers, but it is understood that they do not have to be different. For example, one advertising agent may manage the plurality of advertisement-providing servers 5a to 5c and eliminate the agent□s server 4, and each of the advertisement-providing servers 5a to 5c may have the functions of the agent □s server.

The user □s computer 6 is a computer managed and used by the user U who views the advertisement-providing sites 12a to 12c. When the user U views the advertisement-providing site 12a via the Internet W using the user □s computer 6, the advertisement image 9a is displayed on the display screen of the user □s computer 6 with various types of information within the advertisement-providing site 12a.

In addition, when the user U is interested in the advertisement image 9a and calls the displayed number □0125423-0011002553□using the user□s phone 8 at home, it is received by the call receiving server 2 and the phone call is made to the advertiser A.

The advertisement information management server 1 is a server computer that configures the principal part of this advertisement information managing system S and is connected to the agent□s server 4 via the Internet W. This advertisement information management server 1 internally includes a central processing unit (CPU), which is not shown, and the CPU functions as the identification information-generating part and the information-verifying part.

The identification information-generating part has a function for generating the plurality of items of identification information 11a to 11c. Each item of this identification information 11a to 11c is unique information and is 17-digit phone number information as described above in the present Embodiment 1. The identification information-generating part also has a function to send the generated identification information 11a to 11c to the agent □s server 4.

A memory device, which is not shown, is provided inside the advertisement information management server 1. An identification information database 1a is established within the memory device as shown in Figure 7. The generated identification information 11a to 11c is retained within this identification information database 1a, and information-recording parts 15a to 15c are provided corresponding to each item of the identification information 11a to 11c. The advertisement information management server 1 has a function to combine each of the plurality of items of identification information 11a to 11c with the banner image 10 in order to generate the plurality of advertisement images 9a to 9c when it receives the banner image 10 from the agent□s server 4, and it sends the advertisement images 9a to 9c to the agent□s server 4. Furthermore, it is understood that the banner image 10 may be combined with the identification information 11a to 11c within the agent□s server 4 rather than the advertisement information management server 1.

On the other hand, the advertisement information management server 1 is also connected to the call receiving server 2. In the present Embodiment 1, the advertisement information management server 1 is directly connected to the call receiving server 2, but it is understood that it may be connected via the Internet W. When the 17-digit phone number information made by the user U is received as input information 16 in the call receiving server 2, the information-verifying part cross-checks the input information 16 with the identification information 11a to 11c within the identification information database 1a. In addition, when the input information 16 and the identification information 11a match (i.e., when the input information 16 input into the user□s phone 8 by the user U corresponds to the identification information 11a), history information such as the time and date of the call, the phone number (phone number of the caller) of the origin of the call (i.e., the user□s phone 8), and the duration of the call is recorded in the information-recording part 15a corresponding to the identification information 11a.

According to the history information of this identification information database 1a, it is possible to ascertain when and how many times who has called according to which identification information 11a to 11c. In other words, the degree of the advertisement effect of each of the advertisement images 9a to 9c can be ascertained.

By sending this history information to the agent□s server 4 and cross-checking it with the advertisement-providing-server management database 4a within the agent□s server 4, it is also possible to ascertain the degree of the advertisement effect of each of the advertisement-providing sites 12a to 12c.

The call receiving server 2 is a server computer for receiving the call from the user□s phone 8 of the user U and is connected to the advertisement information management server 1 and the telephone network T. The user□s phone 8 and the advertiser□s phone 7 of the advertiser A are also connected to this telephone network T, and the user U may call the advertiser A via the call receiving server 2.

The call receiving server 2 internally includes a central processing unit (CPU), which is not shown, and the CPU functions as the call receiving part, the input information-extraction part, and the information-sending part.

The call receiving part has a function to receive the call that is made using the user□s phone 8 and relays and forwards the call to the advertiser□s phone 7.

Specifically, when the user U inputs the 17-digit phone number information □0125423-0011002553□into the user □s phone 8, a call is made to the call receiving server 2 according to the first 7-digit server identification number. The call receiving part recognizes it as a call to the advertiser A based on the second 10-digit advertisement identification number without receiving the call and forwards the call to the advertiser□s phone 7. As the call receiving part does not receive the call, the user U may make the phone call smoothly as if they directly called the advertiser A without being aware of the relay operation of the call receiving server 2. At this time, the call receiving part acquires the phone number information □0125423-0011002553 □input by the user U.

The input information-extraction part has a function to extract the phone number information as the input information 16 when it receives the phone number information in the call receiving part. In the present Embodiment 1, all of the 17 digits of the phone number information input into the user□s phone 8 by the user U are extracted as the input information 16, but it is understood that a part of the phone number information may be extracted as the input information 16 or voice information stated by the user U according to information such as a keyword may be extracted as the input information 16.

For example, when the user U inputs the first 7-digit server identification number to make a call, the call receiving server 2 receives it, and during the automatic response, the second 10-digit advertisement identification number may be input, the call may be forwarded to the advertiser□s phone 7 according to the advertisement identification number, and the second 10-digit advertisement identification number may be extracted as the input information 16 by the input information-extraction part.

Moreover, in cases in which the call receiving server 2 has a voice-recognition function, the user U may say the keyword as the input information 16 during the automatic response in order to cause the voice information to be extracted as the input information 16 by the input information-extraction part. For example, it is possible to provide a configuration in which, when the user U says a keyword such as □discount, □ a certain privilege is given to the user U by the advertiser A. In this case, the identification information 11a to 11c within the advertisement images 9a to 9c posted on the advertisement-providing sites 12a to 12c must be set to a keyword such as □discount.□

Furthermore, in the present Embodiment 1, even when the phone number information set as the identification information is □0125423-0011002553, □□0125423-0011002554, □ or □0125423-0011002555,□ the call is forwarded to the advertiser A. In addition, it is possible to ascertain which of the advertisement images 9a to 9c the user U has called according to due to the differences in the numbers of the phone number information, specifically the final digit.

The information-sending part has a function to send the input information 16 extracted by the input information-extraction part to the advertisement information management server 1. The input information 16 is cross-checked with the identification information 11a to 11c within the identification information database 1a by the information-verifying part within the advertisement information management server 1 at the destination.

Furthermore, in the present Embodiment 1, an example has been described that is configured so that the call receiving server 2 extracts the input information in the call and sends the input information to the advertisement information management server 1, but it is understood that a configuration may be used in which the advertisement information management server 1 includes the input information-extraction part, and when it receives call information in the call receiving server 2, it extracts the input information from the information.

Moreover, in the present Embodiment 1, an example has been described in which the advertisement information management server 1 and the call receiving server 2 are configured as separate bodies, but it is understood that a configuration may be used in which the functions of both are implemented with one server computer. Furthermore, one server computer may function as the agent□s server 4 in addition to the advertisement information management server 1 and the call receiving server 2.

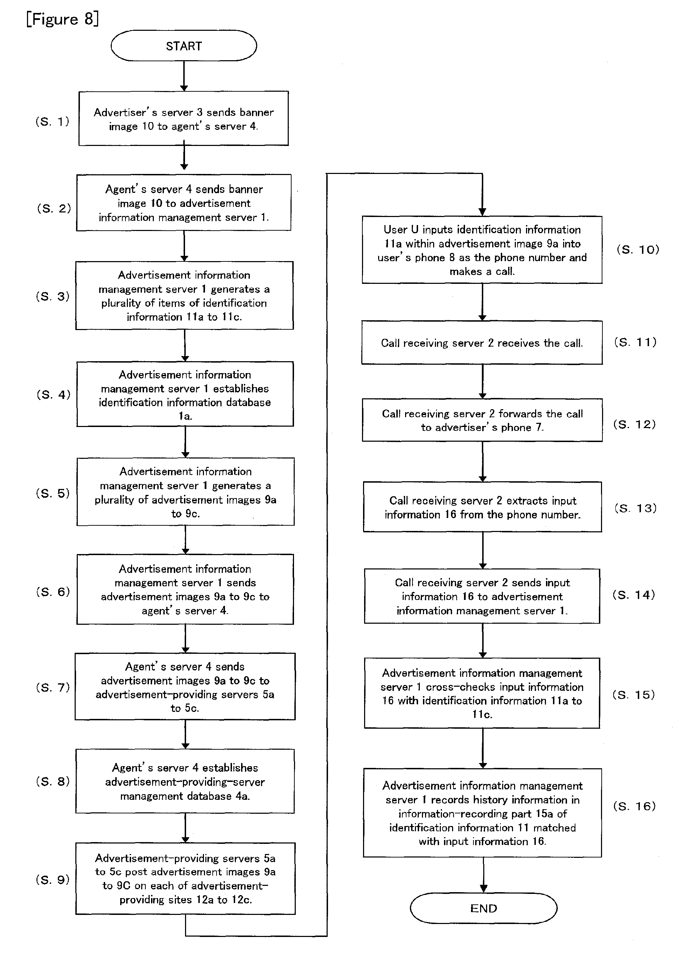

Next, the operations of the advertisement information managing system S using the advertisement information managing method according to this Embodiment 1 will be described using the flowchart shown in Figure 8.

The advertiser□s server 3 sends the banner image 10 to the agent□s server 4 according to the request for posting an advertisement from the advertiser A (S. 1). The agent□s server 4 sends the received banner image 10 to the advertisement information management server 1 (S. 2). The advertisement information management server 1 generates the plurality of items of identification information 11a to 11c (S. 3), establishes the identification information database 1a, and internally retains the identification information 11a to 11c (S. 4). It then combines the identification information 11a to 11c with the received banner image 10 in order to generate the plurality of advertisement images 9a to 9c (S. 5) and sends the advertisement images 9a to 9c to the agent□s server 4 (S. 6).

When the agent□s server 4 receives the advertisement images 9a to 9c, it sends the advertisement images 9a to 9c to each of the advertisement-providing servers 5a to 5c (S. 7) and establishes the advertisement-providing-server management database 4a with the advertisement images 9a to 9c associated with the allocation numbers 14a to 14c specific to each of the servers for providing the advertisement at the destination (S. 8).

The advertisement-providing servers 5a to 5c post the received advertisement images 9a to 9c on each of the advertisement-providing sites 12a to 12c (S. 9).

The user U uses the user□s computer 6 to access the advertisement-providing server 5a and views the advertisement-providing site 12a. If the user is interested in the advertisement image 9a posted on the advertisement-providing site 12a, the user U then inputs the identification information 11a within the advertisement image 9a into the user□s phone 8 as the phone number in order to make a call (S. 10).

The call is connected to the call receiving server 2 according to the first 7-digit server identification number of the identification information 11a, and the call receiving server 2 receives the call (S. 11). The call receiving server 2 then forwards the call to the advertiser□s phone 7 according to the second 10-digit advertisement identification number of the identification information 11a (S. 12). The user□s phone 8 and the advertiser□s phone 7 are mutually connected, allowing the user U and the advertiser A to talk.

At the same time, the call receiving server 2 acquires the phone number input by the user□s phone 8 and extracts the input information 16 from the phone number (S. 13). In the present Embodiment 1, the entire input phone number is extracted as the input information 16. The input information 16 is then sent to the advertisement information management server 1 (S. 14).

The advertisement information management server 1 cross-checks the received input information 16 with the identification information 11a to 11c within the identification information database 1a (S. 15) and records history information such as the time and date of the call, the phone number of the originator, and the duration of the call in the information-recording part 15a of the identification information 11a matching to the input information 16 (S. 16).

### [Embodiment 2]

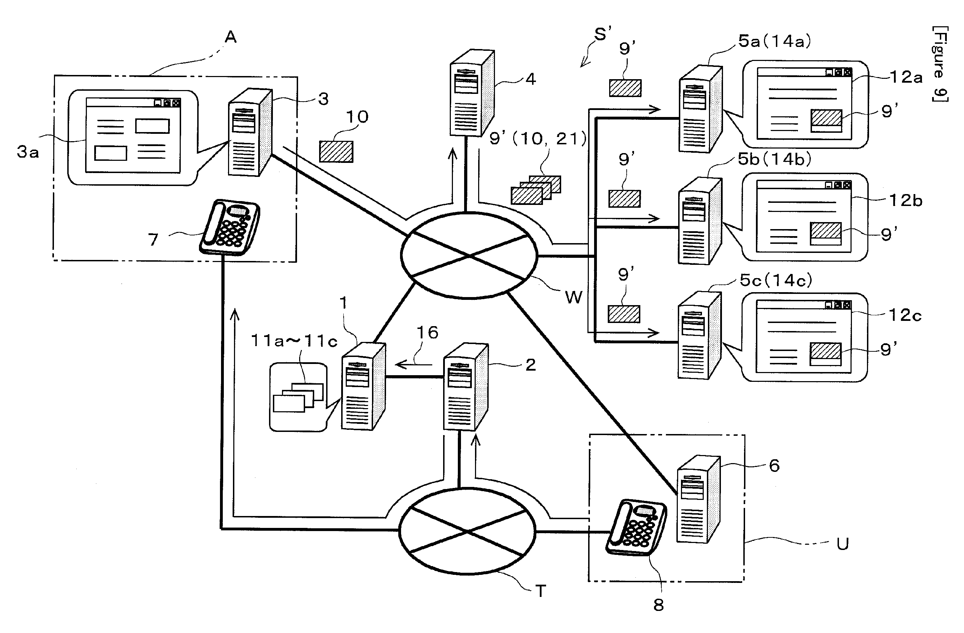

Figure 9 is a schematic diagram illustrating the overall configuration of an advertisement information managing system S□using the advertisement information managing method according to Embodiment 2 of the present invention. Furthermore, in the present Embodiment 2, configurations identical to those in Embodiment 1 are provided with the same symbols and the descriptions are omitted.

In this Embodiment 2, in the agent□s server 4, a script (index information) 21 written in Flash, etc. is combined with the banner image 10 sent from the advertiser□s server 3 and is sent to each of the advertisement-providing servers 5a to 5c as advertisement information 9□.

This script 21 is a description program for indirectly indexing the identification information 11a to 11c. In other words, the script 21 itself does not directly represent each item of the identification information 11a to 11c, but it is a description program for representing the association with each item of the identification information 11a to 11c.

For example, when the user U uses the user□s computer 6 to access the advertisement-providing server 5c and views the advertisement-providing site 12c, the posted information within this advertisement-providing site 12c is sent to the user□s computer 6 and the content is displayed. At this time, the script 21 within the advertisement information 9 □on the advertisement-providing site 12c is executed, and the identification information 11c is required from the advertisement information management server 1 in order to cause the content to be displayed on the user □s computer 6.

When the script 21 is executed, the allocation numbers 14a to 14c of the advertisement-providing sites 12a to 12c on which the advertisement information 9□ including the script 21 is posted are also sent to the advertisement information management server 1. Therefore, the advertisement information management server 1 can generate identification information 11a to 11c that are different for each of the advertisement-providing sites 12a to 12c and send it.

Therefore, each item of the advertisement information 9□posted on each of the advertisement-providing sites 12a to 12c is combined information of the same banner image 10 and the script 21, but each item of the advertisement information 9□displayed on the user □s computer 6 is a different item of the identification information 11a to 11c.

Furthermore, the identification information 11a to 11c may be preliminarily generated and retained in the advertisement information management server 1 or may be generated in the advertisement information management server 1 each time the script 21 is executed. Moreover, for example, if the advertisement information management server 1 is configured to acquire the execution time of the script 21 (i.e., time the user U accesses the advertisement-providing server and views the advertisement-providing site), it is possible to change the identification information displayed on the same advertisement-providing site 12a in accordance with the execution time of the script 21. It is therefore possible to statistically ascertain the advertisement effect of the advertisement-providing site 12a at different times.

According to this Embodiment 2, because it is not necessary to preliminarily allocate identification information to each advertisement-providing site, it is not necessary to preliminarily ensure a large amount of identification information in accordance with the number of advertisement-providing sites and it is possible to flexibly respond to increases and decreases in the number of advertisement-providing sites.

### [Embodiment 3]

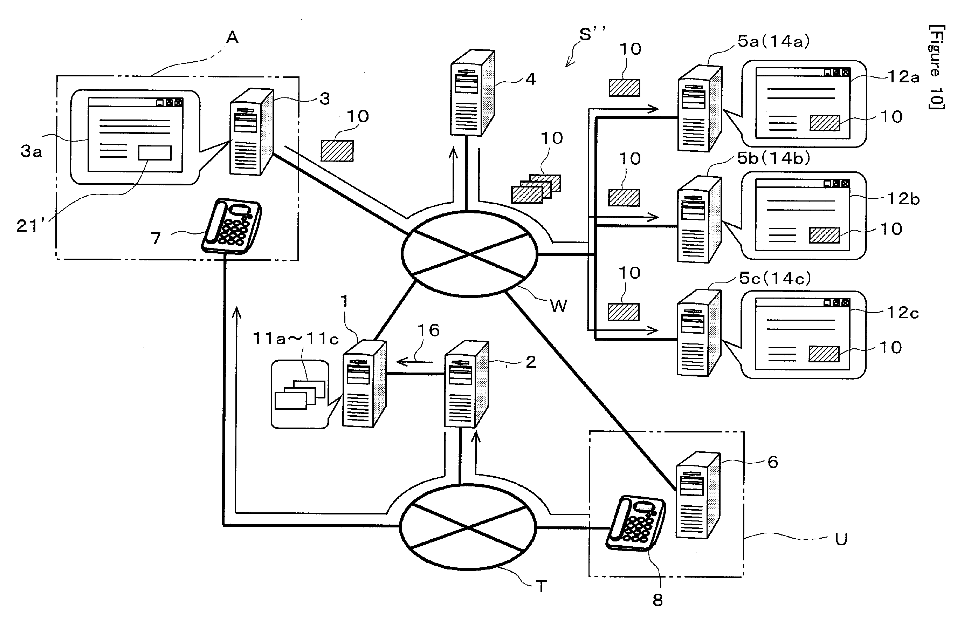

Figure 10 is a schematic diagram illustrating the overall configuration of an advertisement information managing system S□using the advertisement information managing method according to Embodiment 3 of the present invention. Furthermore, in Embodiment 3, configurations identical to those in Embodiment 1 are given the same symbols and the descriptions are omitted.

In this Embodiment 3, the identification information 11a to 11c are not displayed on each of the advertisement-providing sites 12a to 12c and only the banner image 10 sent from the agent □s server 4 is posted. Processing has been performed on the banner image 10 for linking to the advertiser □s server 3, and when the user U clicks on the banner image 10 using the mouse, the advertiser □s site 3a is displayed on the display screen of the user □s computer 6.

At that time, for example, when the banner image 10 posted on the advertisement-providing site 12a is clicked, the allocation number 14a of the advertisement-providing server 5a is sent to the advertiser □s server 3 to be linked to.

A script 21 □is embedded within the advertiser □s site 3a, and this script 21 □is executed by access from the user □s computer 6 and sends the allocation number 14a of the advertisement-providing server 5a to be linked from to the advertisement information management server 1.

The advertisement information management server 1 generates the identification information 11a corresponding to the allocation number 14a of the advertisement-providing server 5a according to the execution of the script 21 □and sends it to the advertiser □s server 3. When the advertiser □s server 3 acquires the identification information 11a from the advertisement information management server 1, it displays the identification information 11a on the advertiser □s site 3 a.

The script 21□embedded within the advertiser □s site 3a is capable of displaying each different item of the identification information 11a to 11c in accordance with the advertisement-providing sites 12a to 12c to be linked from. Therefore, it is possible to easily ascertain which of the advertisement-providing sites 12a to 12c the user U has viewed before making the call.

The preferred embodiments of the present invention have been described as the above, but the present invention is not limited to these, and various variations and modifications may be made without departing from the spirit and scope of the present invention.

For example, in Embodiments 1 and 2, configurations have been described in which the advertiser □s site 3a is linked to the advertisement images 9a to 9c and the content of the advertiser □s site 3a is displayed on the user □s computer 6 by a click on the advertisement images 9a to 9c, but this advertiser □s site 3a is not an essential requirement. In other words, in Embodiments 1 and 2, the location to which the advertisement images 9a to 9c are linked may be a site other than the advertiser □s site 3 (a site managed by someone other than the advertiser A), and cases in which the advertisement images 9a to 9c do not link to any of the sites do not deviate from the purpose of the present invention.

It is understood that in this case, the banner image 10 is not sent from the advertiser □s site 3a to the agent □s server 4, but the banner image 10 may be sent from another of the above sites to the agent □s server 4 or the banner image 10 may be generated within the agent □s server 4.

Moreover, in the above Embodiments 1 to 3, cases have been described in which the user □s computer 6 to be connected to the Internet W and the user □s phone 8 that is used to make a call have different configurations. However, for example, when using a cell phone provided with an Internet connection function and a phone call function or a computer also provided with a phone call function through an Internet phone function (a so-called □IP phone function□), it is possible to both view the advertisement-providing sites 12a to 12c and make a call to the advertiser □s phone 7 through a single item of hardware (a cell phone or a computer with an IP phone function).

For example, when one of the advertisement-providing sites 12a to 12c or the advertiser □s site 3a is displayed on the screen of a cell phone and one of the items of the identification information 11a to 11c is posted within the site, it is possible to make a call to the phone number indexed by the identification information 11a to 11c using the phone-to function of the cell phone by highlighting and selecting the identification information 11a to 11c.

Similarly, when one of the advertisement-providing sites 12a to 12c or the advertiser □s site 3a is displayed on the screen of a computer with an IP phone function and one of the items of the identification information 11a to 11c is posted within the site, it is possible to make a call to the phone number indexed by the identification information 11a to 11c using the IP phone function by selecting (clicking on) the identification information 11a to 11c.

### Brief Description of the Drawings

**Figure 1** is a schematic diagram illustrating the overall configuration of an advertisement information managing system using the advertisement information managing method according to Embodiment 1 of the present invention.
**Figure 2** is a configuration diagram of an advertisement-providing-server management database established inside the agent □s server shown in Figure 1.
**Figure 3** is an example of a display screen for a web page of the advertisement-providing site shown in Figure 1.
**Figures 4** is a diagram illustrating a method of displaying identification information in a balloon on an advertisement-providing site, wherein Figure 4(a) shows a state in which the mouse pointer is not placed on the banner image and the identification information is not displayed in a balloon and Figure 4(b) shows a state in which the mouse pointer is placed on the banner image and the identification information is displayed in a balloon.
**Figures 5** is a diagrams illustrating a method of displaying identification information in another window on an advertisement-providing site, wherein Figure 5(a) shows a state before the banner image is clicked on in which the identification information is not displayed and Figure 5(b) shows a state in which the banner image has been clicked and the identification information is displayed in another window.
**Figure** 6 is a diagram illustrating another example of providing identification information on an advertisement-providing site that shows a state in which a QR code is displayed within a banner image.
**Figure 7** is a configuration diagram of an identification information database established within the advertisement information management server shown in Figure 1.
**Figure 8** is a flowchart illustrating the operations of the advertisement information management server shown in Figure 1.
**Figure 9** is a schematic diagram illustrating the overall configuration of an advertisement information managing system using the advertisement information managing method according to Embodiment 2 of the present invention.
**Figure 10** is a schematic diagram illustrating the overall configuration of an advertisement information managing system using the advertisement information managing method according to Embodiment 3 of the present invention.

### Description of the Symbols

- A:: Advertiser
- M:: Mouse pointer
- S,: S□, S□: Advertisement information managing systems
- T:: Telephone network
- U:: User
- W:: Internet
- 1:: Advertisement information management server (the principal part of the advertisement information managing system)
- 1a:: Identification information database
- 2:: Call receiving server (call receiving system)
- 3:: Advertiser □s server
- 3a:: Advertiser □s site (second Internet site)
- 4:: Agent □s server
- 4a:: Advertisement-providing-server management database
- 5a: to 5c: Advertisement-providing servers
- 6:: User □s computer
- 7:: Advertiser □s phone
- 8:: User □s phone
- 9a to 9c:: Advertisement images (advertisement information)
- 9 □:: Advertisement information
- 10:: Banner image (basic advertisement information)
- 11a to 11c:: Identification information
- 12a to 12c:: Advertisement-providing sites (first Internet sites)
- 13a:: Advertisement frame
- 14a to 14c:: Allocation numbers
- 15a to 15c:: Information-recording parts
- 16:: Input information
- 17a:: QR code (two-dimensional barcode)
- 21, 21□:: Scripts (index information)

## Claims

1. An advertisement information managing method used in an advertisement information managing system for judging which advertisement information among a plurality of advertisement information a call that is made according to the advertisement information has been made according to, said advertisement information managing method comprising:
a step for generating the plurality of identification information; and,
a step for cross-checking said plurality of identification information with input information in the call that is made according to one of the advertisement information among the plurality of the advertisement information generated in order to index said plurality of identification information respectively.

2. The advertisement information managing method according to Claim 1, further comprising:
a step for generating said plurality of advertisement information by combining said plurality of identification information with basic advertisement information,
a step for posting a plurality of the advertisement information on a plurality of first Internet sites,
a step for receiving said call,
a step for extracting said input information in the call; and,
a step for judging that said call has been made according to the advertisement information that indexes said identification information when the input information and the identification information match.

3. The advertisement information managing method according to Claim 1, further comprising:
a step for generating said plurality of advertisement information by combining a plurality of index information that indexes said plurality of identification information with basic advertisement information,
a step for posting the plurality of advertisement information on a plurality of first Internet sites,
a step for receiving said call,
a step for extracting said input information in the call; and,
a step for judging that said call has been made according to the advertisement information that indexes said identification information when the input information and the identification information match.

4. The advertisement information managing method according to Claim 1, further comprising:
a step for posting a plurality of basic advertisement information on a plurality of first Internet sites, said basic advertisement information link to a second Internet site,
a step for posting said advertisement information on said second Internet site, said advertising information being associated with the first Internet site when said basic advertisement information on the first Internet site is selected,
a step for receiving said call,
a step for extracting said input information in the call; and,
a step for judging that said call has been made according to advertisement information that indexes the identification information when the input information and the identification information match.

5. An advertisement information managing system for judging which advertisement information among a plurality of advertisement information a call that is made according to the advertisement information has been made according to, said advertisement information managing system comprising:
an identification information-generating part that generates a plurality of identification information; and,
an information-verifying part that cross-checks said plurality of identification information with input information in the call that is made according to one of the advertisement information among the plurality of advertisement information generated in order to index the plurality of identification information respectively.

6. A call receiving method used in an advertisement information managing system for judging which advertisement information among a plurality of advertisement information a call that is made according to the advertisement information has been made according to, said call receiving method comprising:
a step for receiving the call that is made according to one of the advertisement information among the plurality of advertisement information generated in order to index a plurality of identification information respectively; and,
a step for externally sending input information in the call in order to cross-check the input information with said plurality of identification information.

7. A call receiving system that receives a call in order to judge which advertisement information among a plurality of advertisement information a call that is made according to the advertisement information has been made accoring to, said call receiving system comprising:
a call receiving part for receiving the call that is made according to one of the advertisement information among the plurality of advertisement information generated in order to index a plurality of identification information respectively; and,
an information-sending part for externally sending input information in the call in order to cross-check the input information with said plurality of identification information.

## Amended claims

### Amended claims under Art. 19.1 PCT

**1.** (Amended) An advertisement information managing method used in an advertisement information managing system for judging which advertisement information among a plurality of advertisement information a call that is made according to advertisement information has been made according to, said advertisement information managing method comprising:
a step for generating the plurality of identification information;
a step for generating said plurality of advertisement information that respectively indexes the plurality of identification information by combining said plurality of identification information with basic advertisement information respectively; and,
a step for cross-checking said plurality of identification information with input information in the call that is made according to one of the advertisement information among said plurality of advertisement information.

**2.** (Amended) The advertisement information managing method according to Claim 1, further comprising:
a step for generating said plurality of advertisement information that can be posted on a plurality of first Internet sites by combining said plurality of identification information with the basic advertisement information respectively,
a step for receiving said call,
a step for extracting said input information in the call; and,
a step for judging that said call has been made according to the advertisement information that indexes said identification information when the input information and the identification information match.

**3.** (Amended) The advertisement information managing method according to Claim 1, further comprising:
a step for generating said plurality of advertisement information that can be posted on a plurality of first Internet sites by combining a plurality of index information that indexes said plurality of identification information with basic advertisement information,
a step for receiving said call,
a step for extracting said input information in the call; and,
a step for judging that said call has been made according to the advertisement information that indexes said identification information when the input information and the identification information match.

**4.** The advertisement information managing method according to Claim 1, further comprising:
a step for posting a plurality of basic advertisement information on a plurality of first Internet sites, said
basic advertisement information link to a second Internet site,
a step for posting said advertisement information on said second Internet site, said advertising information being associated with the first Internet site when said basic advertisement information on the first Internet site is selected,
a step for receiving said call,
a step for extracting said input information in the call; and,
a step for judging that said call has been made according to advertisement information that indexes the identification information when the input information and the identification information match.

**5.** (Amended) An advertisement information managing system for judging which advertisement information among a plurality of advertisement information a call that is made according to the advertisement information has been made according to, said advertisement information managing system comprising:
an identification information-generating part that generates a plurality of identification information; and
an information-verifying part that cross-checks said plurality of identification information with input information in the call that is made according to one of the advertisement information among the plurality of advertisement information generated in order to index the plurality of identification information respectively, by combining said plurality of identification information with basic advertisement information.

**6.** (Amended) A call receiving method used in an advertisement information managing system for judging which advertisement information among a plurality of advertisement information a call that is made according to the advertisement information has been made according to, said call receiving method comprising:
a step for generating the plurality of advertisement information that respectively indexes the plurality of identification information by respectively combining the plurality of identification information with basic advertisement information,
a step for receiving the call that is made according to one of advertisement information among said plurality of advertisement information; and
a step for externally sending input information in the call in order to cross-check the input information with said plurality of identification information.

**7.** (Amended) A call receiving system that receives a call in order to judge which advertisement information among the plurality of advertisement information a call that is made according to the advertisement information has been made according to, said call receiving system comprising:
an identification information-generating part that generates the plurality of identification information,
a call receiving part that receives the call that is made according to one of the advertisement information among the plurality of advertisement information generated in order to respectively index the plurality of identification information by combining said plurality of identification information with basic advertisement information; and,
an information-sending part for externally sending input information in the call in order to cross-check the input information with said plurality of identification information.
